# EUROPEAN PATENT APPLICATION

(11) **EP 4 733 037 A1**
(43) Date of publication of application: **29.04.2026**
(21) Application number: 24208563.7
(22) Date of filing: 24.10.2024
(51) Int. Cl.: B29C 48/09, B29C 48/90, B29C 48/885, B29C 48/92, B29C 48/88, B29C 48/32, B29K 623/00

(54) **DEVICE, PRE-COOLING SYSTEM AND PROCESS FOR POLYPROPYLENE PIPE PRODUCTION**

(71) Applicant: Abu Dhabi Polymers Co. Ltd (Borouge) - Sole Proprietorship L.L.C., Abu Dhabi (AE); Borealis GmbH, 1020 Vienna (AT)
(72) Inventor: ERYIGIT, Birkan, Abu Dhabi (AE); IQBAL, Zafar, Abu Dhabi (AE)
(74) Representative: Maiwald GmbH

(57) **Abstract**

The present invention relates to a device for producing a polypropylene pipe comprising a pre-cooling system, which is situated between the die head and the calibration sleeve unit,
a process for producing preparing a polypropylene pipe comprising the step of cooling the not yet hardened polypropylene pipe using a pre-cooling system downstream of the die head before entering the calibration sleeve unit for adjusting the outer diameter of the not yet hardened polypropylene pipe,
the use of said pre-cooling system in said device for reducing the temperature of the not yet hardened polypropylene pipe to a temperature of below 210°C,
the use of said pre-cooling system in said device for increasing the line speed of the device and
the use of said pre-cooling system in said device for reducing the impact failure rate of polypropylene pipes compared to polypropylene pipes produced on a extrusion line without pre-cooling system, each produced at the same line speed, by at least 20%, determined according to ISO 9854-1-1994, Part 1 at 0°C and -5°C.

## Description

The present invention relates to a device for producing a polypropylene pipe comprising a pre-cooling system, which is situated between the die head and the calibration sleeve unit, a process for producing preparing a polypropylene pipe comprising the step of cooling the not yet hardened polypropylene pipe using a pre-cooling system downstream of the die head before entering the calibration sleeve unit for adjusting the outer diameter of the not yet hardened polypropylene pipe, the use of said pre-cooling system in said device for reducing the temperature of the not yet hardened polypropylene pipe to a temperature of below 210°C, the use of said pre-cooling system in said device for increasing the line speed of the device and the use of said pre-cooling system in said device for reducing the impact failure rate of polypropylene pipes compared to polypropylene pipes produced in a device without pre-cooling system, each produced at the same line speed, by at least 20%, determined according to ISO 9854-1-1994, Part 1 at 0°C and -5°C.

### Technical background

Plastic pipes are produced by extrusion in a continuous process where molten material flow axially through a die and solidified in cooling tanks with a suitable calibration sleeve unit.

In pipe production industry, the thing very important is to reach maximum capacity of the extrusion line to being produced pipes with using less energy and less manpower and be sent to a customer as much early as possible.

Regular polypropylene pipe production at maximum capacity is difficult because the molten polypropylene pipe grades tend to have a rather high stickiness especially at temperatures above 210°C, which are usually applied in the extruder. As a consequence, when the molten polypropylene material has entered a suitable calibration sleeve after exit from a suitable die-head is sticking to the surface of the calibration sleeve and is not slipping at the entrance of the calibration sleeve and so the production is not being done at maximum capacity line speed.

Thus, there is a need in the art for developing strategies for increasing the line speed of polypropylene pipe extrusion lines, which allow running the extrusion lines at maximum capacity but do not impair the mechanical properties and the surface quality of the polypropylene pipe.

In the present invention a pre-cooling system is introduced into the polypropylene pipe extrusion line between the die head and the calibration sleeve unit, which cools the formed polypropylene melt exiting the die head before entry of the calibration sleeve unit to such an extent that the stickiness of the polypropylene melt is reduced and the line speed can be increased.

The resulting polypropylene pipes surprisingly show improved impact properties compared to polypropylene pipes run in the same extrusion line without said pre-cooling system at the same line speed, in an impact failure test according to ISO 9854-1-1994, Part 1 at 0°C and -5°C.

Good impact properties in the impact failure test according ISO 9854-1-1994, Part 1 at 0°C and -5°C of the polypropylene pipes produced by the extrusion lines comprising the pre-cooling system can also be obtained after increase of the line speed up to maximum capacity.

The resulting polypropylene pipes additionally show good surface quality.

### Summary of the invention

In a first aspect, the present invention relates to a device for producing a polypropylene pipe comprising
- an extruder;
- a die head downstream of the extruder comprising a circular die and a circular mandrel in concentric shape, which enclose a gap between the inner surface of the die and the outer surface of the mandrel for the polypropylene melt;
- a calibration sleeve unit downstream of said die head;
- a vacuum tank downstream of the calibration sleeve unit; and
- optionally a cooling unit downstream of said calibration sleeve unit,
characterized in that
a pre-cooling system is situated between said die head and said calibration sleeve unit

In a second aspect, the present invention relates to a process for preparing a polypropylene pipe comprising the following steps:
a) Compounding a polypropylene resin in an extruder for preparing a polypropylene melt;
b) Forming a polypropylene pipe from the polypropylene melt by guiding the polypropylene melt through the gap between the inner surface of a die and the outer surface of a mandrel of a die head downstream of the extruder;
c) Adjusting the outer diameter of the not yet hardened polypropylene pipe in a calibration sleeve unit downstream of said die head;
d) Setting the outer diameter of the not yet hardened polypropylene pipe by applying vacuum on the outer surface of the polypropylene pipe in a vacuum tank downstream of said calibration sleeve unit;
characterized in that
the not yet hardened polypropylene pipe is cooled using a pre-cooling system downstream of the die head before entering the calibration sleeve unit for adjusting the outer diameter of the not yet hardened polypropylene pipe.

In a third aspect, the present invention relates to the use of a pre-cooling system in the device as described above or below for reducing the temperature of the not yet hardened polypropylene pipe to a temperature of below 210°C, such as in the range of from 180 to 208°C, preferably from 190 to 205°C.

In a fourth aspect, the present invention relates to the use of a pre-cooling system in the device as described above or below for increasing the line speed of the device.

In a fifth aspect, the present invention relates to the use of a pre-cooling system in the device as described above or below for reducing the impact failure rate of polypropylene pipes compared to polypropylene pipes produced in a device without pre-cooling system, each produced at the same line speed, by at least 20%, determined according to ISO 9854-1-1994, Part 1 at 0°C and -5°C.

### Brief description of the figures

Figure 1 shows a schematic overview of one embodiment of the device for producing a polypropylene pipe according to the invention.
Figure 2 shows a three-dimensional excerpt of schematic overview of Figure 1 showing the positioning of the pre-cooling system downstream of the die head and upstream of the calibration station.
Figure 3 shows a detailed schematic figure of the pre-cooling system.

### Detailed description of the invention

### Device

In a first aspect, the present invention relates to a device for producing a polypropylene pipe comprising
- an extruder;
- a die head downstream of the extruder comprising a circular die and a circular mandrel in concentric shape, which enclose a gap between the inner surface of the die and the outer surface of the mandrel for the polypropylene melt;
- a calibration sleeve unit downstream of said die head;
- a vacuum tank downstream of the calibration sleeve unit; and
- optionally a cooling unit downstream of said calibration sleeve unit
characterized in that
a pre-cooling system is situated between said die head and said calibration sleeve unit.

The device is preferably an extrusion line for producing a polypropylene pipe.

As extruder any extruder suitable for polypropylene pipe extrusion is applicable.

The extruder preferably is a single screw extruder.

The screw diameter is usually in the range of from 30 to 120 mm, preferably from 45 to 90 mm, more preferably from 45 to 75 mm.

The screw length to diameter (L/D) ratio is usually in the range of from 30 to 40, preferably from 30 to 36.

The line speed is preferably in the range of from 1 m/min to 20 m/min, preferably from 5 m/min to 17 m/min, more preferably from 7 m/min to 15 m/min.

It is preferred that the extruder is suitable for producing polypropylene pipes with smaller diameters, such as up to 63 mm diameter, like from 12 mm to 63 mm diameter, preferably from 20 to 50 mm diameter, more preferably from 20 to 40 mm diameter, still more preferably from 20 to 32 mm diameter, i.e. 20, 25 or 32 mm diameter.

The wall thickness of the polypropylene pipes is usually from 1.9 mm to 10.5 mm, preferably from 2.3 to 8.3 mm, more preferably from 2.8 to 6.7 mm, still more preferably from 3.4 to 5.4 mm.

The polypropylene pipes are preferably classified as SDR 6, SDR 7.4 or SDR 11, more preferably SDR 6 or SDR 7.4, still more preferably as SDR 6.

The device can further comprise one or more co-extruders e.g. for extruding multi-layered polypropylene pipes

The device further comprises a die head.

The die head comprises a circular die and a circular mandrel in concentric shape, which enclose a gap between the inner surface of the die and the outer surface of the mandrel for the polypropylene melt.

The dimensions of the circular die and the circular mandrel are generally adapted to obtain tubular propylene melts which resemble the above discussed dimensions of the resultant polypropylene pipe.

The die head is situated downstream from the extruder.

It is preferred that the die head is situated as such that the polypropylene melt exiting the extruder is directly introduced into the die head.

Usually the die head is situated on the exit of the extruder via an adapter.

It is preferred that the die head is removably mounted on the exit of the extruder via the adapter.

As a consequence the die head can be exchanged to a die head of other dimensions depending on the dimensions of the polypropylene pipe to be extruded.

As die head any die head comprising a circular die and a circular mandrel in concentric shape suitable for polypropylene pipe extrusion is applicable.

The die head can also be a die head with more than one passage ways for polypropylene melts, e.g. for extruding multi-layered pipes.

The device further comprises a calibration sleeve unit. The calibration sleeve unit is used for sizing and cooling the polypropylene pipe.

The calibration sleeve unit is situated downstream of the die head.

Thereby, it is preferred that there is a gap between the exit of the die head and the entrance of the calibration sleeve unit. Said gap generally allows that in the beginning of the extrusion process the first part of the tubular polypropylene melt exiting the die head is manually introduced and fitted into the calibration sleeve unit, which allows a steady and uniform passage of the cooling polypropylene melt through the calibration sleeve unit and the further downstream units especially at the beginning of the extrusion process.

The device in characterized in that a pre-cooling system is situated between said die head and said calibration sleeve unit.

It is thereby preferred that the pre-cooling system is situated in the gap between the exit of the die head and the entry of the calibration sleeve unit.

The pre-cooling system comprises an air flow system with a multitude of air outlets situated circumferentially around the outer surface of the not yet hardened polypropylene pipe exiting the die head.

It is preferred that the multitude of air outlets are more than one, such as from 2 to 20, preferably from 4 to 16, still more preferably from 8 to 12, most preferably about 10 air outlets.

The air flow system preferably comprises an air pipe, which circumvents the not yet hardened polypropylene pipe exiting the die head preferably in a circular arc.

The air pipe preferably comprises a multitude of openings, such as more than one, such as from 2 to 20, preferably from 4 to 16, still more preferably from 8 to 12, most preferably about 10 openings, which are situated along the air pipe, preferably along the circular arc.

It is preferred that each air outlet is mounted on an opening of the air pipe as such that air is directed from the air pipe though the opening to the air outlet.

The air outlet preferably comprises a hose and an air exit.

The hose and the air exit of the air outlet are preferably adjustable.

It is preferred that the hose and the air exit of each air outlet is adjusted as such that the air exits of the multitude of air outlets are situated around the outer surface of the not yet hardened polypropylene pipe exiting the die head that the outer surface of the not yet hardened polypropylene pipe exiting the die head is fully encircled by the multitude of air outlets.

Preferably the pre-cooling system has the technical effect that the outer surface of the not yet hardened polypropylene pipe exiting the die head is cooled, preferably by air flow from the multitude of air outlets, to such an extent that before entering the calibration sleeve unit the temperature of the outer surface of the not yet hardened polypropylene pipe is below 210°C, such as in the range of from 180 to 208°C, preferably from 190 to 205°C.

As a consequence the polymeric melt of the not yet hardened polypropylene pipe does not stick especially to the entrance of the calibration sleeve unit, in which the not yet hardened polypropylene pipe is sized.

The calibration sleeve unit preferably comprises an entrance of the calibration sleeve n the front end part of the calibration sleeve unit and downstream of the pre-cooling system for sizing the not yet hardened polypropylene pipe and cooling the not yet hardened polypropylene pipe below crystallization temperature of the polypropylene.

The calibration sleeve unit is preferably made from metal, preferably non-ferrous metal.

The calibration sleeve preferably comprises a circular cylindrical form.

The dimensions of the circular cylindrical form are preferably selected as such that the diameter of the inner surface of the circular cylindrical form is adjusted to the outer diameter of the polypropylene pipe to be extruded.

It is preferred that the diameter of the inner surface of the circular cylindrical form is up to 10 %, such as from 1 to 10 %, preferably from 2 to 7 %, more preferably from 3 to 5 % larger than the outer diameter of the polypropylene pipe to be extruded.

The larger diameter of the inner surface of the circular cylindrical form allows for shrinking of the polypropylene pipe upon cooling at the downstream units of the device.

Preferably a film of liquid, preferably water, is fed into an inlet of the calibration sleeve unit for cooling the outer surface of the not yet hardened polypropylene pipe below the crystallization temperature of the polypropylene and as lubricant for reducing the frictional forces on the outer surface of the polypropylene pipe.

The purpose of the calibration sleeve unit is to size the outer diameter of the polypropylene pipe and to cool the outer surface of the polypropylene pipe below the crystallization temperature of the polypropylene.

In one embodiment the calibration sleeve unit is removably mounted into the frontend part of a vacuum tank. In said embodiment the calibration sleeve unit can be removed from a vacuum tank and replaced by a calibration sleeve unit of different dimensions. In this embodiment the extrusion process must be stopped for exchanging at least the calibration sleeve unit before extruding a polypropylene pipe with a different diameter.

In another embodiment the inner diameter of the calibration sleeve unit can be adjusted during extrusion. Such calibration sleeve units are e.g. known from EP 1 249 331 A2 or WO 00/16962.

The device further comprises a vacuum tank downstream of the calibration sleeve unit for further cooling and hardening the polypropylene pipe and setting the outer diameter of the polypropylene pipe.

It is preferred that the calibration sleeve unit is fitted into the frontend part of the vacuum tank.

The vacuum tank preferably applies a vacuum on the polypropylene pipe for setting the outer diameter of the polypropylene pipe.

The vacuum is preferably operated at from 0.1 to 0.4 bar absolute pressure, more preferably from 0.1 to 0.4 bar absolute pressure, still more preferably around 0.2 bar absolute pressure.

Downstream of the vacuum tank of the device can further comprise a cooling unit.

The cooling unit can comprise one or more, such as one to three cooling units to ensure complete solidification of the polypropylene pipe, if needed. Multiple cooling units usually are arranged sequentially, if present.

The cooling unit(s) thereby independently can comprise spray tanks for spraying liquid, such as water, on the outer surface of the polypropylene pipe.

These cooling unit(s) are well known in the art and can be selected from any known cooling units suitable for cooling a polypropylene pipe.

The total length of the cooling section, comprising the calibrating sleeve unit and optional cooling unit, is selected as such that the temperature of the outer surface polypropylene pipe exiting the cooling section is preferably not more than 30°C, such as from 10 to 30°C, preferably from 15 to 25°C, more preferably around 20°C.

Downstream of the calibration sleeve unit or, if present, the cooling unit the extrusion line further comprises a haul-off unit for actively drawing the hardened polypropylene pipe through the device.

Such a haul off unit usually comprises concentrically arranged caterpillars, which are preferably held under pneumatic pressure against the polypropylene pipe to transmit the haul-off forces.

As haul-off unit any haul-off units suitable for polypropylene pipes can be used.

By adjusting the speed of the haul-off unit usually the line speed of the device is adjusted.

As most downstream unit usually a cutting unit is present in the device.

In the cutting unit the polypropylene pipe is preferably cut to the predetermined length. As cutting unit any cutting unit suitable for polypropylene pipes can be used.

### Process

In a second aspect, the present invention relates to a process for preparing a polypropylene pipe comprising the following steps:
a) Compounding a polypropylene resin in an extruder for preparing a polypropylene melt;
b) Forming a polypropylene pipe from the polypropylene melt by guiding the polypropylene melt through the gap between the inner surface of a die and the outer surface of a mandrel of a die head downstream of the extruder;
c) Adjusting the outer diameter of the not yet hardened polypropylene pipe in a calibrating sleeve unit downstream of said die head;
d) Setting the outer diameter of the not yet hardened polypropylene pipe by applying vacuum on the outer surface of the polypropylene pipe in a vacuum tank downstream of said calibration sleeve unit;
characterized in that
the not yet hardened polypropylene pipe is cooled using a pre-cooling system downstream of the die head before entering the calibration sleeve unit for adjusting the outer diameter of the not yet hardened polypropylene pipe.

It is preferred that the process is adapted to the device as described above or below.

Thereby, it is preferred that all embodiments and units of the device as described above or below can be applied to the process as described above or below.

It is preferred that the polypropylene resin is extruded in a single screw extruder preferably with the dimensions as described above or below.

The polypropylene melt exiting the extruder preferably has a temperature of from 190 to 230°C, more preferably from 200 to 225°C, still more preferably from 210 to 220°C.

The polypropylene pipe from the polypropylene melt by guiding the polypropylene melt through the gap between the inner surface of a die, preferably a circular die, and the outer surface of a mandrel, preferably a circular mandrel, of a die head downstream of the extruder. The circular die and the circular mandrel are preferably in concentric shape.

The polypropylene pipe preferably has a circular tubular form.

Additionally one or more further polypropylene resins can be compounded in one or more additional extruder to prepare one or more additional polypropylene melts.

These additional polypropylene melts can be used for forming a multilayer pipe by guiding the one or more additional polypropylene melts though additional passages of the die head.

It is preferred that the outer surface of the not yet hardened polypropylene pipe exiting the die head preferably has a temperature of from 190 to 230°C, more preferably from 200 to 225°C, still more preferably from 210 to 220°C.

The process of the present invention is characterized in that the not yet hardened polypropylene pipe is cooled using a pre-cooling system downstream of the die head before entering the calibration sleeve unit for adjusting the outer diameter of the not yet hardened polypropylene pipe.

It is preferred that the not yet hardened polypropylene pipe is cooled by uniform airflow around the outer surface of the not yet hardened pipe.

Thereby, the outer surface of the not yet hardened polypropylene pipe is preferably cooled before entering the calibration sleeve unit for adjusting the outer diameter of the not yet hardened polypropylene pipe to a temperature of below 210°C, such as in the range of from 180 to 208°C, preferably from 190 to 205°C.

After pre-cooling the outer surface of the not yet hardened polypropylene pipe the outer diameter of the not yet hardened polypropylene pipe is adjusted by applying vacuum on the outer surface of the polypropylene pipe in a calibration sleeve unit downstream of said die head preferably by guiding the not yet hardened polypropylene pipe though an entrance of the calibration sleeve unit at the front end of the calibration sleeve unit. Thereby, the calibration sleeve unit is preferably situated in the front end of the vacuum tank.

Additionally the outer surface of the not yet hardened polypropylene pipe the outer diameter of the not yet hardened polypropylene pipe is started to be cooled in the calibration sleeve unit preferably firstly by feeding liquid, such as water though the calibration sleeve unit and preferably further downstream in the vacuum tank.

In the vacuum tank the outer diameter of the not yet hardened polypropylene pipe is set by applying vacuum.

The vacuum is preferably operated at from 0.1 to 0.4 bar absolute pressure, more preferably from 0.1 to 0.4 bar absolute pressure, still more preferably around 0.2 bar absolute pressure.

The polypropylene pipe can be further cooled downstream from the vacuum tank by spraying the outer surface of the polypropylene pipe with liquid such as water onto the outer surface of the polypropylene pipe.

The cooling steps are thereby adjusted as such that the temperature of the outer surface of the polypropylene pipe after cooling is not more than 30°C, such as from 10 to 30°C, preferably from 15 to 25°C, more preferably around 20°C.

The line speed of the process is preferably adjusted by adjusting the haul-off speed of a haul off unit.

Thereby, the polypropylene pipe is actively drawn by the haul off unit after the cooling steps.

As one of the last process steps the polypropylene pipe is cut into pieces of predetermined length.

### Use

In a third aspect, the present invention relates to the use of a pre-cooling system in the device as described above or below to reduce the temperature of the not yet hardened polypropylene pipe to a temperature of below 210°C, such as in the range of from 180 to 208°C, preferably from 190 to 205°C.

In a fourth aspect, the present invention relates to the use of a pre-cooling system in the device as described above or below for increasing the line speed of the device.

In a fifth aspect, the present invention relates to the use of a pre-cooling system in the device as described above or below for reducing the impact failure rate of polypropylene pipes compared to polypropylene pipes produced in a device without pre-cooling system, each produced at the same line speed, by at least 20%, determined according to ISO 9854-1-1994, Part 1 at 0°C and -5°C.

It is preferred that for the uses of the third to fifth aspect all embodiments and units of the device and of the pre-cooling system as well as the process as described above or below can be applied.

### Reference signs in the figures

- 1: extruder
- 2: die head
- 3: vacuum tank
- 4: cooling unit
- 5: pre-cooling system
- 6: haul off unit
- 7: cutting unit

- 31: calibration sleeve unit
- 32: front end part of vacuum tank

- 51: air pipe
- 52: opening
- 53: air outlet
- 54: hose
- 55: exit

### Detailed description of the figures

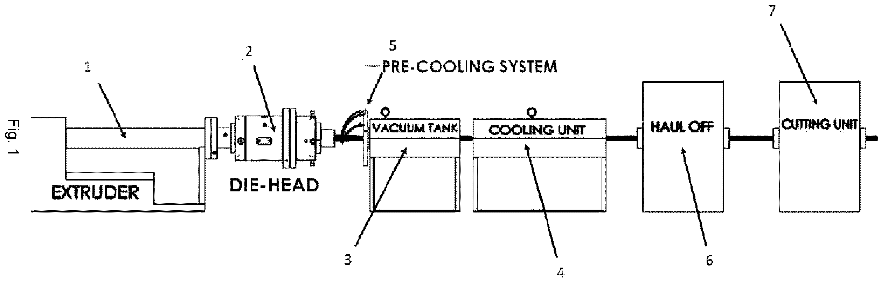

Figure 1 shows a schematic overview of one embodiment of the device for producing a polypropylene pipe according to the invention.

A polypropylene resin is compounded in an extruder (1) to obtain a polypropylene melt. The extruder (1) is preferably a single screw extruder. The polypropylene melt exiting the extruder (1) is guided through the gap between the inner surface of a circular die and the outer surface of a circular mandrel (not shown) of the die head (2) to form the not yet hardened polypropylene pipe, which preferably has a circular tubular form. The not yet hardened polypropylene pipe exiting the die head (2) enters the calibration sleeve unit (31) (not shown) and a vacuum tank (3),in which the outer diameter of the not yet hardened polypropylene pipe is adjusted by applying vacuum on the outer surface of the polypropylene pipe. In the vacuum tank (3) the polypropylene pipe is guided though a water bath for cooling the polypropylene pipe. Additionally in the vacuum tank (3) the outer diameter of the polypropylene pipe is set by applying vacuum. Downstream of the vacuum tank (3) the outer surface of the polypropylene pipe is further cooled in a cooling unit (4) by spraying liquid such as water. By exiting the cooling unit (4) the outer surface of the polypropylene pipe after cooling is not more than 30°C, such as from 10 to 30°C, preferably from 15 to 25°C, more preferably around 20°C. The line speed of the process is adjusted in the haul-off unit (6) downstream of the cooling unit, in which the polypropylene pipe is actively drawn. Downstream of the haul-off unit (6) the polypropylene pipe is cut in pieces of predetermined length in the cutting unit (7).

Between the die head (2) and the vacuum tank (3), especially between the die head (2) and the calibration sleeve unit (31) (not shown) the pre-cooling system (5) is situated for pre-cooling the pipe exiting the die head to a temperature of below 210°C, such as in the range of from 180 to 208°C, preferably from 190 to 205°C before entering the calibration sleeve unit entrance (3).

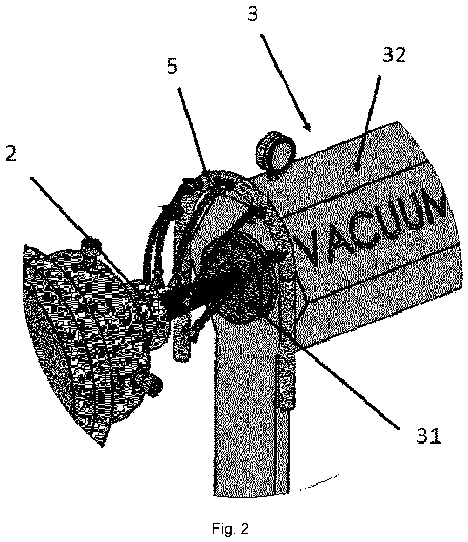

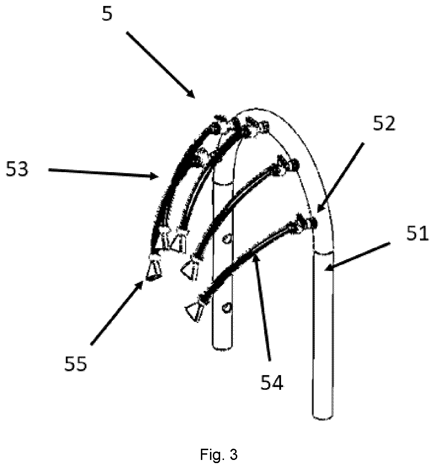

Figure 2 shows a three-dimensional excerpt of schematic overview of Figure 1 showing the positioning of the pre-cooling system (5) downstream of the die head (2) and upstream of the calibration sleeve unit (31). The detailed schematic figure of the pre-cooling system is shown in Figure 3.

The not yet hardened polypropylene pipe exits the die head (2) and enters the calibration sleeve unit (31) through the entrance of the calibration sleeve unit (31). The calibration sleeve unit is situated at the front end part (32) of the vacuum tank (3). In the spatial gap between the exit of the die head (2) and the calibration sleeve unit (31) the pre-cooling system (5) is situated. The pre-cooling system (5) comprises an air flow system through which air is blown circumferentially onto the outer surface of the not yet hardened pipe. The air flow system comprises an air pipe (51), which circumvents the not yet hardened polypropylene pipe exiting the die head (2) preferably in a circular arc. The air pipe (51) comprises a multitude of openings (52) - 5 openings (52) shown in Figures 2 and 3 - which are situated along the circular arc of the air pipe (51). On each opening (52) an air outlet (53) is mounted. Each air outlet (53) comprises a hose (54) and an air exit (55). The hose (54) and the air exit (55) are adjustable as such that the air exits (55) are situated around the outer surface of the not yet hardened polypropylene pipe as such that the outer surface of the not yet hardened polypropylene pipe is fully encircled by the air outlets (53). Thereby the air outlets (53) can be adjusted to the outer diameter of the polypropylene pipe.

### Benefits of the invention

The pre-cooling system allows for reduced stickiness of the not yet hardened polypropylene pipe at the entrance of the calibration sleeve unit.

As a consequence the friction upon calibrating the size of the polypropylene pipe at the entrance of the calibration sleeve unit is significantly reduced.

The line speed of the extrusion line can be significantly increased up to the maximum capacity of the extrusion line without impairing the surface quality of the extruded polypropylene pipe on both the inner and outer surface.

By reaching maximum capacity, the costs for energy and manpower are reduced per output.

The mechanical properties of the extruded pipes are improved as shown in a reduced impact failure rate compared to polypropylene pipes produced in a extrusion line without pre-cooling system, each produced at the same line speed, determined according to ISO 9854-1-1994, Part 1 at 0°C and -5°C.

The pre-cooling system is easily implemented into existing pipe extrusion lines and has very limited investment costs.

The pre-cooling system can be removed if not needed for certain pipe grades.

### Examples

The present invention is further illustrated by the following examples:

### Extrusion line

For the extrusion examples an extrusion line with the following units was used:
- Suction conveyor- Labotek
- Feeding hopper system - ConPro
- Pipe extruder- Krauss Maffei L/D36
- Pipe extruders die-head 32mm PP - Krauss Maffei
- Calibration sleeves 32mm for PP production - Krauss Maffei
- Cooling units' bath- 1 vacuum & 3 spray tank - K. Sandern
- Haul off - Krauss Maffei
- Cutting unit - Krauss Maffei

### Pre-cooling system

Into the space between the die-head and the calibration sleeves an air pipe is situated which circumvents the polypropylene pipe exiting the die-head in a circular arc.

The circular arc of the air pipe has 10 openings, on each of which a hose and an air outlet at the other end of the hose is mounted.

The hoses and air outlets are adjusted around the polypropylene pipe as such that the whole polypropylene pipe is encircled by the air outlets for allowing a uniform air flow around the outer surface of the polypropylene pipe. The distance between the outer surface of the polypropylene pipe and the air outlets is about 5 to 15 cm.

### Pipe extrusion

Pipe extrusion is performed by plasticizing of the material in the extruder and then forming it through passing a round die-head. The final dimension is given in the calibration sleeve unit where the pipe is formed by vacuum to its final dimension.

The temperature profile during extrusion in the extruder was 175 to 215 °C.

32mm SDR6 pipes were produced using RA150E grade polypropylene resin.

RA150E is a propylene random copolymer pipe grade having a density of 905 kg/m³ (ISO 1183), a melt flow rate MFR₂ of 0.26 g/10 min (ISO 1133, 2.16 kg, 230°C), a tensile modulus of 800 MPa (ISO 527, 1 mm/min) and a Charpy notched Impact Strength at 23°C of 60 kJ/m² (ISO 179/1eA), commercially available from Borouge Pte Ltd, Singapore (all data from technical data sheet)
32 mm polypropylene pipes have been extruded applying 2 different temperature profiles as low melt temperature (LMT-200°C) and high melt temperature (HMT-215°C), and 10 samples with these 2 different temperature profiles have been taken at different line speeds in the range of from 5 m/min to 14 m/min (maximum capacity of the extrusion line) with using pre-cooling system and without. The samples taken are shown in Table 1 below.

**Table 1: Samples**

| Sample no | Sample identify |
|---|---|
| 1 | LMT-5m/min-Without Pre-cooling system |
| 2 | LMT-8m/min-Without Pre-cooling system |
| 3 | LMT-10m/min-Without Pre-cooling system |
| 4 | HMT-5m/min-Without Pre-cooling system |
| 5 | HMT-7m/min-Without Pre-cooling system |
| 6 | HMT-5m/min-With Pre-cooling system |
| 7 | HMT-7m/min-With Pre-cooling system |
| 8 | HMT-10m/min-With Pre-cooling system |
| 9 | HMT-12m/min-With Pre-cooling system |
| 10 | HMT-14m/min-With Pre-cooling system |

The polypropylene pipes of the samples were subjected to an impact test according to ISO 9854-1-1994 Part 1 - Thermoplastic pipes for the transport of fluids - Pendulum impact strength by Charpy method at 0°C and at -5°C

Further the surface quality of the inner and outer surface of the polypropylene pipes of the samples were inspected.

The results of the tests are shown in Table 2 below

**Table 2: Results**

| Sample no | 32 MM PIPE CLASS | IMPACT Test %Failures at 0°C | IMPACT Test %Failures at -5°C | Number of Specimen | Specimen Type | Surface Quality |
|---|---|---|---|---|---|---|
| 1 | | 5 | 40 | | | |
| 2 | | 10 | 35 | | | |
| 3 | | 15 | 20 | | | |
| 4 | | 10 | 50 | | | |
| 5 | | 15 | 35 | | | |
| 6 | SDR6 | 10 | 30 | 20 | ISO 9854/T3 | Inner and outer surface of all samples are good and no significant differences each other. |
| 7 | | 0 | 0 | | | |
| 8 | | 0 | 10 | | | |
| 9 | | 0 | 0 | | | |
| 10 | | 0 | 5 | | | |

With pre-cooling system line speeds of 14 m/min (i.e. 350 kg/h), which corresponds to maximum capacity of the extrusion line can be reached.

Without pre-cooling system only line speeds of 7 m/min (i.e. 175 kg/h) are reached when applying the high melt temperature profile.

The polypropylene pipes extruded with the pre-cooling system show significant reduced impact failures compared to the polypropylene pipes extruded without pre-cooling system at the same line speed and temperature profile (i.e. comparing samples 4 and 6 and 5 and 7)

Even at higher line speeds up to maximum capacity improved impact failure rates are observed.

All pipes show comparable surface quality.

## Claims

1. A device for producing a polypropylene pipe comprising
• an extruder (1);
• a die head (2) downstream of the extruder (1) comprising a circular die and a circular mandrel in concentric shape, which enclose a gap between the inner surface of the die and the outer surface of the mandrel for the polypropylene melt;
• a calibration sleeve unit (31) downstream of said die head (2);
• a vacuum tank (3) downstream of the calibration sleeve unit (31); and
• optionally a cooling unit (4) downstream of said vacuum tank (3),
**characterized in that**
a pre-cooling system (5) is situated between said die head (2) and said calibration sleeve unit (31).

2. The device according to claim 1, wherein the pre-cooling system comprises an air flow system with more than one, such as from 2 to 20, preferably from 4 to 16, still more preferably from 8 to 12 air outlets (53) situated circumferentially around the outer surface of the not yet hardened polypropylene pipe exiting the die head (2).

3. The device according to claim 1 or 2, wherein the calibration sleeve unit (31) is situated at the front end part of the vacuum tank (3). and downstream of the pre-cooling system for sizing the not yet hardened polypropylene pipe and cooling the not yet hardened polypropylene pipe below crystallization temperature of the polypropylene.

4. The device according to any one of the preceding claims, wherein a vacuum in the range of 0.1 to 0.4 bar is applied in the vacuum tank (3) for setting the outer diameter of the polypropylene pipe.

5. The device according to any one of the preceding claims further comprising one or more cooling units (4) downstream of the vacuum tank (3) for further cooling and hardening the polypropylene pipe.

6. The device according to claim 5 further comprising a haul-off unit (6) downstream of the one or more cooling units (4) for actively drawing the hardened polypropylene pipe through the device.

7. The device according to claim 6 further comprising a cutting unit (7) downstream from the haul-off unit (6) for cutting the hardened polypropylene pipe at a predetermined length.

8. The device according to any one of the preceding claims, wherein the different units can be adjusted to outer polypropylene pipe diameters of from 12 to 63 mm, preferably from 20 to 50 mm, more preferably from 20 to 40 mm, still more preferably from 20 to 32 mm.

9. A process for preparing a polypropylene pipe comprising the following steps:
a) Compounding a polypropylene resin in an extruder for preparing a polypropylene melt;
b) Forming a polypropylene pipe from the polypropylene melt by guiding the polypropylene melt through the gap between the inner surface of a die and the outer surface of a mandrel of a die head downstream of the extruder;
c) Adjusting the outer diameter of the not yet hardened polypropylene pipe in a calibration sleeve unit downstream of said die head;
d) Setting the outer diameter of the not yet hardened polypropylene pipe by applying vacuum on the outer surface of the polypropylene pipe in a vacuum tank downstream of said calibration sleeve unit;
**characterized in that**
the not yet hardened polypropylene pipe is cooled using a pre-cooling system downstream of the die head before entering the calibration sleeve unit for adjusting the outer diameter of the not yet hardened polypropylene pipe.

10. The process according to claim 9, wherein the not yet hardened polypropylene pipe is cooled using the pre-cooling system by uniform airflow around the outer surface of the not yet hardened pipe.

11. The process according to claims 9 or 10, wherein the outer surface of the not yet hardened polypropylene pipe is cooled using a pre-cooling system before entering the calibration sleeve unit for adjusting the outer diameter of the not yet hardened polypropylene pipe to a temperature of below 210°C, such as in the range of from 180 to 208°C, preferably from 190 to 205°C.

12. The use of a pre-cooling system in the device according to any one of claims 1 to 8 for reducing the temperature of the not yet hardened polypropylene pipe to a temperature of below 210°C, such as in the range of from 180 to 208°C, preferably from 190 to 205°C.

13. The use of a pre-cooling system in the device according to any one of claims 1 to 8 for increasing the line speed of the device.

14. The use of a pre-cooling system in the device according to any one of claims 1 to 8 for reducing the impact failure rate of polypropylene pipes compared to polypropylene pipes produced in a device without pre-cooling system, each produced at the same line speed, by at least 20%, determined according to ISO 9854-1-1994, Part 1 at 0°C and -5°C.
